# EUROPEAN PATENT APPLICATION

(11) **EP 4 332 518 A1**
(43) Date of publication of application: **06.03.2024**
(21) Application number: 23194161.8
(22) Date of filing: 30.08.2023
(51) Int. Cl.: G01F 13/00, B65G 33/08, A01K 5/02

(54) **FUEL MONITORING DEVICES AND METHODS**

(30) Priority: 31.08.2022 GB 202212683
(71) Applicant: Innasol Group Ltd, Chelmsford CM3 2AG (GB)
(72) Inventor: Wheatley, Alan, Chelmsford, CM3 2AG (GB); Watson, Richard, Chelmsford, CM3 2AG (GB); Spiess, Silvio, Chelmsford, CM3 2AG (GB); Wenidoppler, Roland, Chelmsford, CM3 2AG (GB); Thiele, Bernd, Chelmsford, CM3 2AG (GB)
(74) Representative: Cousens, Nico

(57) **Abstract**

The present disclosure relates to a device for measuring fuel output of a screw feeder, the device comprising: a revolution counter configured to connect to a feed screw of a screw feeder; a signal interface in communication with the revolution counter and configured to output a signal corresponding to a revolution of the feed screw; and a coupling portion for coupling the device to an exterior of the screw feeder.

## Description

The present disclosure relates to a devices and methods for monitoring fuel output of screw feeders and biomass boiler systems incorporating such devices and methods.

### Background

Biomass boilers range in sophistication in their ability to interrogate their functionality depending upon the management software employed. In addition, unlike fossil fuels, the quality of biomass fuels, especially woodchip fuels, can be highly variable. This variability can affect the efficient working of the boiler and its subsequent performance. There are many reasons why a biomass boiler may not be operating at an optimal level and less sophisticated boilers are more difficult to diagnose. Even with very good boilers most installers do not have the tools or ability to accurately investigate the biomass heating system beyond the basic functionality which leaves customers unsure if reported issues are based on evidence and data rather than a process of elimination of suspected problems.

Conventional methods for calculating fuel consumption of a biomass boiler include looking at the deposit left by spent fuel and determining the corresponding mass of unspent fuel and monitoring the height of fuel stored in a silo over time or monitoring the volume stored or removed from a silo. However, these methods can only provide an indication of average fuel consumption over extended periods and cannot provide information on fuel consumption during different states of operation such as during start up and shut down. Furthermore, these methods cannot reliably account for the latent weight of dust elements, leading to further inaccuracy.

Thus, there is a need to provide improved devices and methods for monitoring fuel consumption in biomass boilers.

### Summary

This summary introduces concepts that are described in more detail in the detailed description. It should not be used to identify essential features of the claimed subject matter, nor to limit the scope of the claimed subject matter.

In one aspect, a device for measuring fuel output of a screw feeder comprises: a revolution counter configured to connect to a feed screw of a screw feeder; a signal interface in communication with the revolution counter and configured output a signal corresponding to a revolution of the feed screw; and a coupling portion for coupling the device to an exterior of the screw feeder. The fuel output of a screw feeder may be a mass or volume of fuel output, or is may be a mass or volume output per unit of time i.e. a rate of fuel output. The device is configured to be connected to a screw feeder, which in turn may be configured to feed or supply fuel to a biomass boiler. Thus, the device may also be known as a device for measuring fuel consumption of a biomass boiler or for measuring a rate of fuel consumption of a biomass boiler. A screw feeder may be known as an auger, transfer screw or screw conveyor. The screw feeder may be for providing a biomass boiler with fuel, such as wood chips or biomass pellets. Typically, the feed screw is secured at each end by a bearing mounted in the screw feeder, and/or may extend outwardly beyond one or both bearings of the screw feeder. The revolution counter may be known as a tachometer. Revolution counters include mechanical counters, inductive proximity switch counters and a photoelectric counters. However, the inventors have identified that certain mechanical counters are less susceptible to airborne dust which can affect the sensitivity of other types of counters over prolonged operation.

The inventors have identified that if it were possible to monitor fuel consumption of biomass boilers in real time, it would be possible to diagnose any issues with the performance of the boiler more reliably. In order to do this, they have further identified that adding or retro-fitting a fuel monitoring device onto an exterior of a screw feeder for supplying a biomass boiler with fuel is one way to do this. The device of the present disclosure achieves this by measuring the turns of the feed screw in the screw feeder. The turns of the feed screw can then be converted into a mass or volume of fuel. The conversion (determination of a fuel calibration constant or value) is done by first determining how much fuel is output by one rotation of the feed screw of the screw feeder. Then, for every rotation of the feed screw, it can be assumed that this mass or volume of fuel is output by the screw feeder and to the biomass boiler. Alternatively, the conversion can be done theoretically rather than experimentally, for example by calculating the expected mass or volume of fuel output for each rotation based on the dimensions of the feed screw.

A mechanical revolution counter may comprise: a rotating arm configured to connect to the feed screw; and a pivoting arm configured to engage with the rotating arm, wherein each revolution of the rotating arm causes the pivoting arm to pivot once. The device may further comprise a microswitch, wherein the pivoting arm actuates the microswitch each time the pivoting arm pivots. The pivoting arm may comprise a wheel portion configured to engage the rotating arm or the rotating arm may comprise a wheel portion configured to engage the pivoting arm. The wheel portion may be configured to rotate about a limb portion of the pivoting arm/rotating arm. The wheel portion may be configured to engage with a limb portion of the corresponding pivoting arm/rotating arm. The wheel portion may be made of PTFE or any other low surface energy polymer or material in order to reduce friction between with pivoting arm and rotating arm when they engage and ensure smooth operation of the device. Such a mechanical counter has a minimum operational life of over 2,000,000 actuations and has been found to be superior to other actuators for the current application.

The device may further comprise a case, wherein: the case encompasses the revolution counter and the signal interface. The case may be lockable. The signal interface may comprise a connector for connecting the signal interface to a data processor, so that the device can be readily connected to a data processor to receive the signal generated by the signal interface. The case may comprise a hole through which a connection or wire to the connector of the signal interface can pass. Alternatively, the connector and/or signal interface may be mounted in a wall on the case. Alternatively, the signal interface may be a wireless signal interface. The signal interface may be configured to monitor the microswitch. For example, it may be configured to monitor when the microswitch circuit is closed, wherein each revolution of the rotating arm/feed screw causes the microswitch circuit to close once. The coupling portion may be configured to couple the case to the exterior of the screw feeder. The case may comprise a hole for receiving a portion of the feed screw or a connection to the feed screw so that the device can be readily mounted to a screw feeder.

In another aspect, a system for measuring fuel output of a screw feeder comprises: a device as disclosed above, and a data processor connected to the signal interface of the device, wherein the data processor is configured to: record a number of revolutions of a feed screw of a screw feeder; and determine fuel output of the screw feeder based on the number of revolutions of the feed screw. As would be understood, the fuel consumption of a biomass boiler is the same as the fuel output by a screw feeder configured to supply the biomass boiler with fuel. Fuel output may be measured in kg or m³. Rate of fuel consumption/output may be measured in units of kg/min or m³/min. It will be understood that units of mass and units of volume are interchangeable throughout this disclosure using an effective density of a fuel that accounts for the packing density of the fuel. Thus, the data processor may also be configured to record a number of revolutions of a feed screw per unit of time such as per minute and/or may be configured to record the time at which each revolution of the feed screw is completed. The data processor may be a tablet or a computer or any similar data processing device known to the skilled person running software for processing the signal output from the signal interface. The data processor is configured to convert the number of revolutions to a mass or volume of fuel using a fuel calibration constant as described herein.

In another aspect, a biomass boiler system comprises: a biomass boiler; a screw feeder configured to supply the biomass boiler with fuel; and a system as disclosed above, wherein the device for measuring fuel output of a screw feeder is coupled to an exterior of the screw feeder via its coupling portion. The biomass boiler may be configured to consume wood chips and/or biomass pellets. The screw feeder may comprise a drive unit such as a motor coupled to the feed screw and configured to rotate the feed screw. The drive unit may be coupled to the feed screw via a gear train. The drive unit may be connected to an end of the feed screw, such as the same or opposite end of the feed screw connected to the device for fuel monitoring. The biomass boiler system may further comprise a temperature sensor in communication with the data processor and configured to measure an output temperature of the biomass boiler, wherein the data processor is configured to simultaneously record the output temperature and the fuel output of the screw feeder. As would be understood the output temperature of the biomass boiler may be the temperature of heated water output or stored by the boiler. From the dimensions of the boiler and/or flow rate of water out of the boiler the heat generated by the boiler and/or fuel efficiency of the boiler can be calculated. Thus, the boiler may also comprise a water flow rate monitor.

In another aspect, a method of determining fuel output of a screw feeder comprises: recording one or more revolutions of a feed screw of the screw feeder using a device as disclosed above; and determining fuel output based the number of revolutions and a volume or mass of fuel output by one revolution of the feed screw, which may be known as a fuel calibration constant or value.

In another aspect, a method of determining a rate of fuel output of a screw feeder comprises: recording a first revolution and a second revolution of a feed screw of the screw feeder using a device as disclosed above; recording a time of the first revolution and a time of the second revolution; and determining the rate of fuel output of the screw feeder based on a difference between a time of the first revolution and a time of the second revolution and a volume or mass of fuel output by one revolution of the feed screw. The first and second revolutions do not need to be consecutive revolutions. That is, any number of revolutions may be completed between the first and second revolutions, however the total number of revolutions is counted. When the first and second revolutions are consecutive, the total number of revolutions is one. The volume or mass of fuel output by one revolution of the feed screw may be known as the fuel calibration value. The total fuel output by the screw feeder is the total number of revolutions between the first and second revolutions multiplied by the fuel calibration value. The rate is the total fuel output between the first and second revolutions divided by the time between the first and second revolutions.

In another aspect, a method of determining a fuel efficiency of a biomass boiler connected to a screw feeder comprises: determining fuel output of a screw feeder using a device or method as disclosed above; measuring an output temperature of the biomass boiler; and determining the fuel efficiency of the biomass boiler based on the fuel output and the output temperature. The method may further comprise measuring a flow rate of water through the biomass boiler and determining the fuel efficiency of the biomass boiler based on the fuel output, the output temperature and the flow rate. Instead of or in addition to measuring an output temperature of the biomass boiler, the method may comprise measuring heat output in kWh and determining the fuel efficiency of the biomass boiler based on the heat output. The measured rate of fuel consumption can also be combined with other parameters of the biomass boilers such as one or more of buffer/heat store temperatures; flue gas temperatures; kW of energy delivered; fuel usage per hour; and/or water pump functionality/effectiveness. Thus, data from the fuel monitoring device may advantageously be combined with other data received from the boiler and the heat meter. This data and fuel consumption data may be collected over an extended period of time such a day, a week, a month or a year. Advantageously, the inventors have identified that the "real-time" or close to real time monitoring of fuel consumption means that more insight into boiler performance is possible. For example, residual heat on boiler startup and/or boiler shut down can be discounted or included in performance calculations.

In another aspect, a method of improving performance of a biomass boiler comprises: determining a fuel efficiency of a biomass boiler using a method as disclosed above; determining that the fuel efficiency is below a threshold fuel efficiency; and servicing the biomass boiler or replacing the fuel of the biomass boiler. Thus, the inventors have combined software and new data sources to provide the end customers of biomass boilers with accurate diagnostic reports based on hard data to enable optimisation of a biomass heating system's performance, and suggest remedies to optimise the system.

### Brief Description of the Drawings

Embodiments of the present invention will now be described, by way of example only, with reference to the accompanying drawings, in which:
Figure 1 illustrates a conventional screw feeder;
Figure 2 illustrates an end of the screw feeder of Figure 1;
Figure 3 illustrates a device for measuring fuel output of a screw feeder;
Figure 4 illustrates the device of Figure 3 coupled to a screw feeder;
Figure 5 illustrates a block diagram of a system for measuring fuel consumption of a biomass boiler;
Figure 6 illustrates a block diagram of biomass boiler system;
Figure 7 illustrates a flow diagram for a method of determining a fuel efficiency of a biomass boiler;
Figure 8a illustrates a flow diagram for a first method of improving performance of a biomass boiler;
Figure 8b illustrates a flow diagram for a second method of improving performance of a biomass boiler; and
Figure 9 is a table of expected calorific values of common biomass boiler fuels.

### Detailed Description

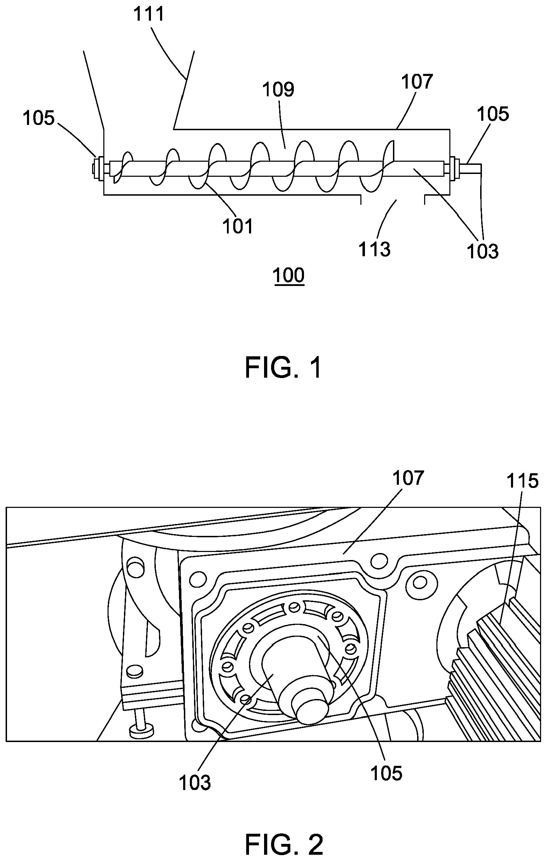

Figure 1 illustrates a conventional screw feeder 100 for supplying a biomass boiler with woodchips or biomass pellets. The screw feeder 100 comprises a feed screw 101, feed screw shaft 103, bearings 105 that secure the feed screw shaft 103, a screw feeder case 107 housing the feed screw 101 and a screw feeder cavity 109 defined by the screw feeder case 107 through which fuel is passed. A hopper 111 through which fuel is added is in communication with the screw feeder cavity 109. Finally, there is a fuel outlet 113 through which fuel is fed by the feed screw 101 into a biomass boiler (not shown). A motor (not shown) is connected to the screw shaft, either directly or indirectly and turns the feed screw 101 in operation. For example, the motor may be connected to a portion of the screw shaft 103 via a gear train.

Figure 2 illustrates an end of the screw feeder 100 illustrated in Figure 1. It can be seen that a portion of the screw shaft 103 protrudes or extends from the screw feeder case 107. The screw shaft 103 is mounted in bearing 105, which in turn is mounted in the screw feeder case 107. A motor 115 is also shown in Figure 2. The motor 115 is connected to the screw shaft 103 via a gear train which is not visible.

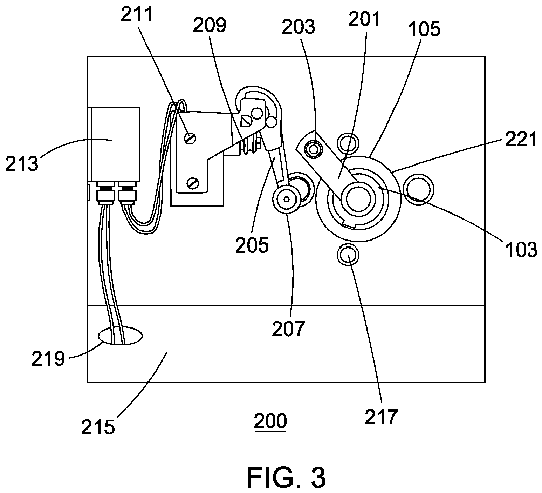

As explained above, the inventors have identified that it is possible to take advantage of the protruding portion of the screw shaft 103 (a common feature of screw feeders) in order to monitor fuel consumption of a biomass boiler fed by the screw feeder 100. Figure 3 illustrates a device 200 for measuring fuel output of a screw feeder 100, which in turn is the same as the fuel consumption of a biomass boiler connected to the screw feeder 100 since all of the fuel passing through the screw feeder 100 is passed into the biomass boiler.

The device 200 comprises a revolution counter configured to connect to a feed screw 101 of a screw feeder 100. The revolution counter comprises a rotating arm 201 with a rotating arm limb 203. The rotating arm is configured to connect to a feed screw 103. A pivoting arm 205 comprises a pivoting arm limb 207 configured to engage with the rotating arm limb 203. The pivoting arm limb 207 comprises a PTFE wheel that reduces the friction between the pivoting arm limb 207 and the rotating arm limb 203 when they engage.

When the pivoting arm 205 engages with the rotating arm 201 and pivots it actuates a button 209 on microswitch 211 of the revolution counter. In detail, the pivoting arm 205, when engaged by the rotating arm 201, depresses the button 209. Thus, each revolution of the rotating arm 201 causes the pivoting arm 205 to pivot once, such that the button 209 is depressed once. A signal interface 213 is in communication with the microswitch 211 and records when the button 209 is actuated and the microswitch circuit is closed. The signal interface 213 is configured to output a conventional M-Bus signal. The signal interface 213 is powered by an external power source connected via power and signal inlet 219. A case 215 encompasses the revolution counter and signal interface 213. The case 215 is lockable in order to restrict access to the revolution counter. The signal interface 213 is electrically connected to an output of the microswitch 211 by wires. The signal interface 213 comprises a connector that allows the signal interface to be connected to a data processor for recording the M-Bus signal.

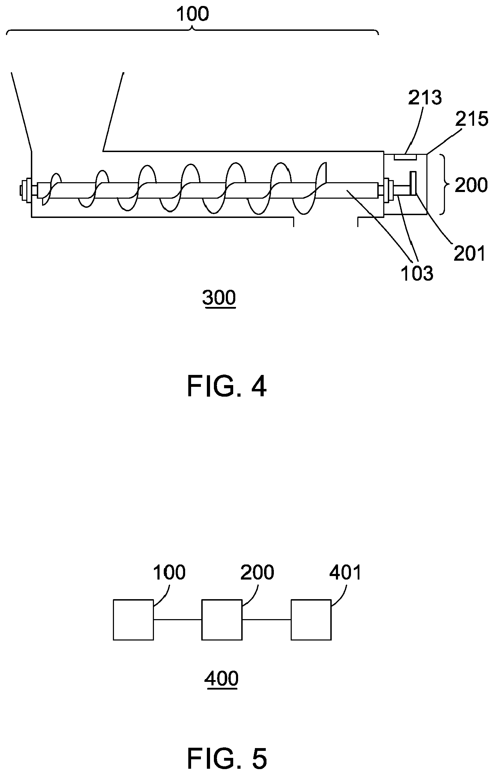

A coupling portion 217 is configured to couple the case 215 to the exterior of a screw feeder 100, and the case 215 comprises a hole 221 for receiving a portion of the feed screw 103. In this example, the coupling portion 217 comprises two holes sized to fit bolts that secure the device 200 to a screw feeder 100. Figure 4 illustrates the device 200 coupled to a screw feeder 100.

Figure 5 illustrates a block diagram of a system 400 for measuring fuel output of a screw feeder. The system 400 comprises a screw feeder 100 with a device 200 for measuring fuel output of the screw feeder 100. The device 200 is connected to a tablet 401 (which is a data processor) via signal interface 213. The tablet 401 has touch-input functionality and also functions as a user-input device. The tablet 401 records the output signal from the device 200 together with a time stamp, so that the time that fuel is delivered by the screw feeder is known. This information can be used to calculate both fuel output and a rate of fuel supplied by the screw feeder 100 in m³/min or kg/min. As explained above, the mass/volume of fuel supplied by one rotation of the feed screw 101 of the screw feeder 100 (fuel calibration constant) is a known value that is determined independently.

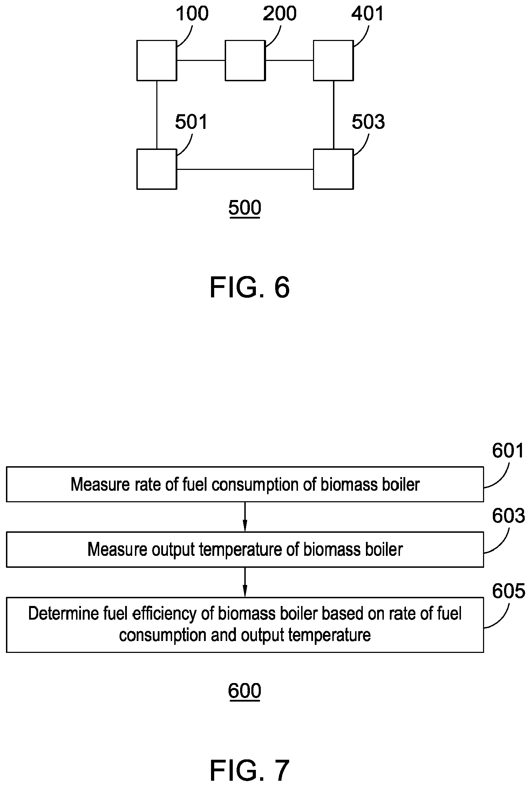

Figure 6 illustrates a block diagram of a biomass boiler system 500. As in the case of the system 400 of Figure 5, the system 500 comprises a screw feeder 100 with a device 200 for measuring fuel output by a screw feeder 100, and the device 200 is connected to a tablet 401 which is a data processor. Furthermore, the screw feeder 100 is connected to a biomass boiler 501 and is configured to supply the biomass boiler 501 with woodchip or pellet fuel. An example of a suitable biomass boiler 501 is an ETA Hack 200 KW woodchip boiler. A control unit 503 comprising a temperature sensor and flow meter is configured to measure an output temperature and flow rate of water output by the biomass boiler 501. The control unit 503 is in communication with the tablet 401. Thus, the control unit 503 continuously records the temperature and flow rate of water output by the boiler 501. The temperature and flow rate of the water can be used to calculate heat output of the boiler in kWh. Together with the rate of fuel consumption, this information may be used to calculate the efficiency of the boiler, or other parameters relating to operation of the boiler which can then be used to optimise boiler performance.

Figure 7 illustrates a flow diagram for a method 600 of determining a fuel efficiency of a biomass boiler. The method comprises: measuring 601 a rate of fuel consumption of a biomass boiler using a fuel monitoring device 200; measuring 603 an output temperature of a biomass boiler 501; and determining 605 the fuel efficiency of the biomass boiler 501 based on the rate of fuel consumption and the output temperature. Methods for determining fuel efficiency are known to the skilled person. In this example, this is done by taking the fuel volume in kg/m³ consumed over a given period (calculated using the rate of fuel consumption) and comparing this to the kJ/kg of the fuel being used. In a related example, the mass or volume of fuel consumed over a given period can be determined directly from the number of rotations of the feed screw i.e. without needing to calculate the rate explicitly. That is to say that measuring 601 a rate of fuel consumption of a biomass boiler using a fuel monitoring device 200 may instead comprise measuring a mass or volume of fuel consumed by the biomass boiler/output by a screw feeder, and the fuel efficiency can be determined based directly on the mass or volume of fuel. The maximum heat in kJ generated by the volume/mass of fuel is then compared against the operating temperature and heat medium of the boiler (in this example LTHW - low temperature hot water) and a volume of water passing through the boiler (determined from a system flow rate via a flow meter over) the same period. Thus, the method may further comprise measuring a system flow rate. The temperature and/or flow rate sensors are either integrated within the boiler controls or external. The overall efficiency of the boiler and/or secondary systems is then calculated from these values.

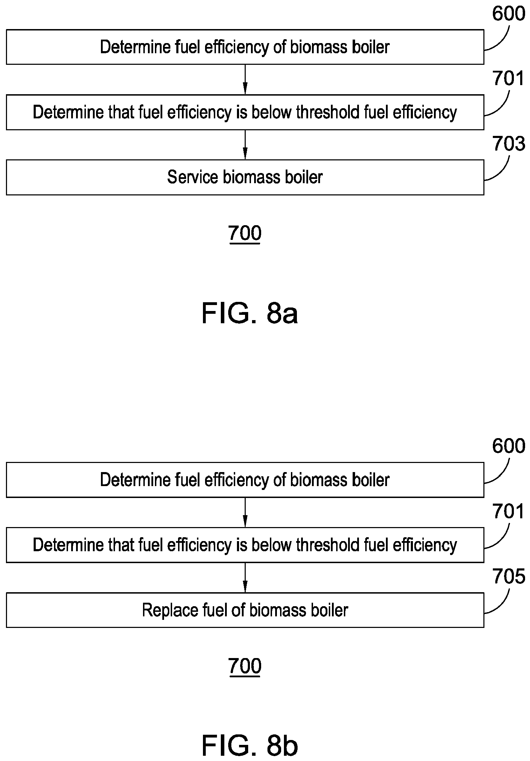

Figure 8a illustrates a flow diagram for a first method 700 of improving performance of a biomass boiler. The method comprises: determining 600 a fuel efficiency of a biomass boiler 501; determining 701 that the fuel efficiency is below a threshold fuel efficiency; and servicing 703 the biomass boiler 501.

Figure 8b illustrates a flow diagram for a second method 700 of improving performance of a biomass boiler. The method comprises: determining 600 a fuel efficiency of a biomass boiler 501; determining 701 that the fuel efficiency is below a threshold fuel efficiency; and replacing 705 the fuel of the biomass boiler 501.

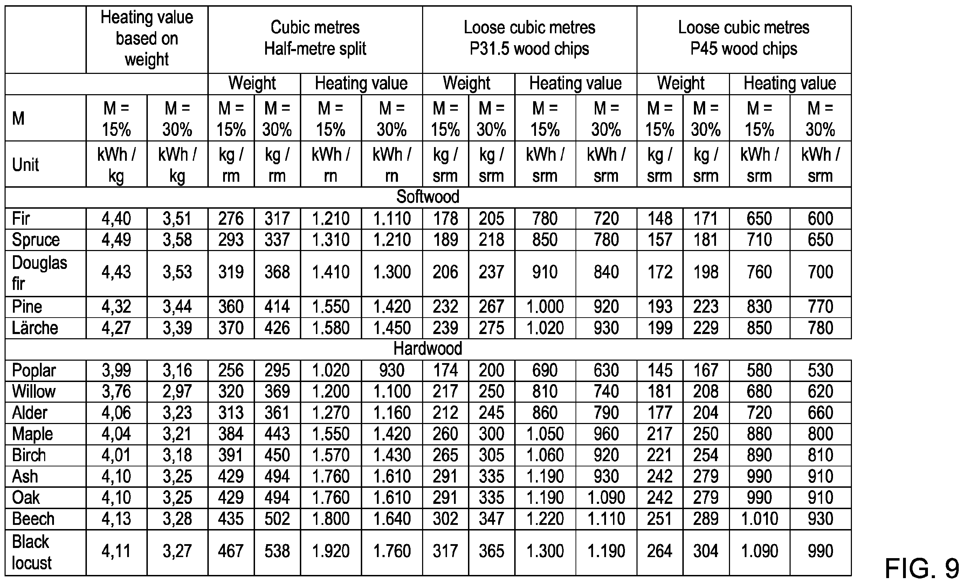

Figure 9 is a table of expected calorific values of common biomass boiler fuels that can be used by the skilled person to determine expected efficiencies of a biomass boiler. For example, a reasonable (i.e. threshold) efficiency might be based on 29% of the maximum heat released by a given fuel.

The embodiments of the invention shown in the drawings and described above are exemplary embodiments only and are not intended to limit the scope of the appended claims, including any equivalents as included within the scope of the claims. Various modifications are possible and will be readily apparent to the skilled person in the art. It is intended that any combination of non-mutually exclusive features described herein are within the scope of the present invention. That is, features of the described embodiments can be combined with any appropriate aspect described above and optional features of any one aspect can be combined with any other appropriate aspect.

## Claims

1. A device for measuring fuel output of a screw feeder, the device comprising:
a revolution counter configured to connect to a feed screw of a screw feeder;
a signal interface in communication with the revolution counter and configured to output a signal corresponding to a revolution of the feed screw; and
a coupling portion for coupling the device to an exterior of the screw feeder.

2. A device according to claim 1, wherein the revolution counter comprises:
a rotating arm configured to connect to the feed screw; and
a pivoting arm configured to engage with the rotating arm,
wherein each revolution of the rotating arm causes the pivoting arm to pivot once.

3. A device according to claim 2 further comprising a microswitch, wherein the pivoting arm actuates the microswitch when the pivoting arm engages with the rotating arm.

4. A device according to claim 2 or 3, wherein the pivoting arm comprises a wheel portion configured to engage the rotating arm or the rotating arm comprises a wheel portion configured to engage the pivoting arm.

5. A device according to any preceding claim, wherein the signal interface comprises a connector for connecting the signal interface to a data processor.

6. A device according to any preceding claim further comprising a case, wherein the case encompasses the revolution counter and the signal interface.

7. A device according to claim 6, wherein the coupling portion is configured to couple the case to the exterior of the screw feeder.

8. A device according to claim 6 or 7, wherein the case comprises a hole for receiving a portion of the feed screw or a connection to the feed screw.

9. A system for measuring fuel output of a screw feeder, wherein the system comprises:
a device according to any preceding claim; and
a data processor connected to the signal interface of the device,
wherein the data processor is configured to:
record a number of revolutions of a feed screw of a screw feeder; and
determine fuel output of the screw feeder based on the number of revolutions of the feed screw.

10. A biomass boiler system comprising:
a biomass boiler;
a screw feeder configured to supply the biomass boiler with fuel; and
a system according to claim 9,
wherein the device for measuring fuel output of a screw feeder is coupled to an exterior of the screw feeder via its coupling portion.

11. A biomass boiler system according to claim 10, further comprising a temperature sensor in communication with the data processor and configured to measure an output temperature of the biomass boiler, wherein the data processor is configured to simultaneously record the output temperature and the fuel output of the screw feeder.

12. A method of determining fuel output of a screw feeder, the method comprising:
recording one or more revolutions of a feed screw of the screw feeder using a device according to any of claims 1 to 8; and
determining fuel output based the number of revolutions and a volume or mass of fuel output by one revolution of the feed screw.

13. A method of determining a rate of fuel output of a screw feeder, the method comprising:
recording a first revolution and a second revolution a feed screw of the screw feeder using a device according to any of claims 1 to 8;
recording a time of the first revolution and a time of the second revolution; and
determining the rate of fuel output based on a difference between the time of the first revolution and a time of the second revolution and a volume or mass of fuel output by one revolution of the feed screw.

14. A method of determining a fuel efficiency of a biomass boiler connected to a screw feeder, the method comprising:
determining fuel output of the screw feeding using the method of claim 12 or determining a rate of fuel output of a screw feeder using the method of claim 13;
measuring an output temperature of the biomass boiler; and
determining the fuel efficiency of the biomass boiler based on the fuel output or rate of fuel output and the output temperature.

15. A method of improving performance of a biomass boiler, the method comprising:
determining a fuel efficiency of a biomass boiler using a method according to claim 15;
determining that the fuel efficiency is below a threshold fuel efficiency; and
servicing the biomass boiler or replacing the fuel of the biomass boiler.
